# EUROPÄISCHE PATENTSCHRIFT

(11) **EP 4 532 242 B1**
(45) Veröffentlichungstag und Bekanntmachung des Hinweises auf die Patenterteilung: **18.02.2026**
(21) Anmeldenummer: 23730760.8
(22) Anmeldetag: 01.06.2023
(51) Int. Cl.: B60K 35/00, B60K 35/10, B60K 35/22, B60K 35/60, B60K 35/81, B60K 35/90

(54) **ANZEIGEVORRICHTUNG, INSBESONDERE FÜR EIN FAHRZEUG, ZUM ANZEIGEN VON INFORMATION MIT UMSCHALTBAREM TEILUNGS- UND PRIVAT-MODUS**
DISPLAY DEVICE, IN PARTICULAR FOR A VEHICLE, FOR DISPLAYING INFORMATION WITH SWITCHABLE SHARING AND PRIVATE MODES
DISPOSITIF D'AFFICHAGE, EN PARTICULIER POUR UN VÉHICULE, POUR AFFICHER DES INFORMATIONS AVEC DES MODES PARTAGÉ ET PRIVÉ COMMUTABLES

(30) Priorität: 03.06.2022 DE 102022114153
(43) Veröffentlichungstag der Anmeldung: 09.04.2025
(73) Patentinhaber: AUO Mobility Solutions Germany GmbH, 59557 Lippstadt (DE)
(72) Erfinder: SANCHEZ CASTILLO, Alberto, 59557 Lippstadt (DE); WIEHEMEIER, Lars, 59557 Lippstadt (DE)
(74) Vertreter: dompatent
(86) Internationale Anmeldenummer: PCT/EP2023/064742
(87) Internationale Veröffentlichungsnummer: WO 2023/232969

(56) Entgegenhaltungen:
- WO-A1-2023/135180
- US-A1- 2020 319 512
- US-B1- 10 649 248

## Beschreibung

Die Erfindung betrifft eine Anzeigevorrichtung insbesondere für ein Fahrzeug zum Anzeigen von Information entweder in einem Privat-Modus oder in einem Teilungs-Modus.

In den letzten Jahren hat sich die Anzahl von Anzeigenvorrichtungen und deren Größe im Fahrzeug stetig vermehrt. Moderne Konzepte beinhalten Anzeigevorrichtungen, die sich über die gesamte Breite der Instrumententafel erstrecken. Auch sind Designvorschläge bekannt, bei denen sowohl auf der Fahrerseite als auch auf der Beifahrerseite separate Anzeigevorrichtungen angeordnet sind.

Aus Sicherheitsgründen sollte der Fahrer eines Fahrzeugs nicht durch solche Information abgelenkt werden können, die auf einer dem Beifahrer zugeordneten Anzeigevorrichtung bzw. in einem Bereich einer Anzeigevorrichtung angezeigt wird, die dem Beifahrer zugeordnet ist.

Aus US-A-2020/0319512 ist eine Anzeigevorrichtung bekannt, bei der das die Anzeigefläche verlassende Licht über die gesamte Anzeigefläche betrachtet entweder gestreut oder kollimiert abgegeben wird. Die Hinterleuchtungseinheit der bekannten Anzeigevorrichtung weist einzeln ansteuerbare Lichtquellen auf, die dimmbar sind. Auf diese Art und Weise können einzelne Bereiche der Anzeigefläche verdunkelt werden, so dass diese Bereiche bei kollimierter Lichtabstrahlung von einem neben der Anzeigefläche befindlichen Punkt aus im Wesentlichen nicht mehr einsehbar ist.

In WO-A-2018/185476 ist ein Beleuchtungssystem für eine Anzeigevorrichtung beschrieben, das eine Vielzahl von catadioptrischen Elementen aufweist.

Ein Touchscreen mit der Möglichkeit des Betriebs in einem Privat-Modus ist in US-B-11 187 945 beschrieben.

Schließlich zeigt US-A-2018/0082068 eine Anzeigevorrichtung mit dynamischem Privat-Modus-Filter.

Aufgabe der Erfindung ist es, eine Anzeigevorrichtung insbesondere für ein Fahrzeug zu schaffen, mit der es möglich ist, die Sichtbarkeit von angezeigter Information bei Betrachtung der Anzeigevorrichtung oder eines Bereichs der Anzeigevorrichtung von der Seite, insbesondere von der Fahrerseite, wahlweise minimieren zu können.

Zur Lösung dieser Aufgabe wird mit der Erfindung eine Anzeigevorrichtung insbesondere für ein Fahrzeug zum Anzeigen von Information vorgeschlagen, wobei die Anzeigevorrichtung versehen ist mit
- einem elektronischen Display mit einer Vorderseite, die eine Anzeigefläche aufweist, und mit einer der Vorderseite abgewandte Rückseite,
- einer Hinterleuchtungseinheit zur Hinterleuchtung des Displays, die eine der Rückseite des Displays zugewandt angeordnete Lichtaustrittsseite aufweist,
- einem optoelektronischen Panel, das zwischen dem Display und der Hinterleuchtungseinheit angeordnet ist, wobei das optoelektronische Panel mindestens zwei oder mehr als zwei unabhängig voneinander entweder in einem Privat-Modus oder in einem Teilungs-Modus betreibbare Bereiche aufweist, in denen von der Hinterleuchtungseinheit auftreffendes Licht für die Sichtbarkeit der auf der Anzeigefläche angezeigten Information bei einem Betrieb in dem Privat-Modus kollimiert an mit diesen Bereichen jeweils fluchtende Regionen des Displays weiterleitbar und für die Sichtbarkeit der auf der Anzeigefläche angezeigten Information bei einem Bereich in dem Teilungs-Modus gestreut an mit diesen Bereichen jeweils fluchtende Regionen des Displays weiterleitbar ist, und
- einer elektronischen Ansteuereinheit zur Ansteuerung sowohl des optoelektronischen Panels für den Betrieb von Bereichen im Privat-Modus oder im Teilungs-Modus als auch des Displays und der Hinterleuchtungseinheit.

Das erfindungsgemäße Konzept verwendet in erster Linie ein optoelektronisches Panel, das zwischen dem elektronischen Display der Anzeigevorrichtung und seiner Hinterleuchtungseinheit angeordnet ist. Mit Hilfe dieses optoelektronischen Panels ist es möglich, in unabhängig voneinander ansteuerbaren und dementsprechend unterschiedlich betreibbaren Bereichen von der Hinterleuchtungseinheit auftreffendes Licht zum Display hin entweder gebündelt (vorstehend und nachfolgend mit "kollimiert" bezeichnet) oder gestreut weiterzuleiten. Regionen des Displays, zu denen Hinterleuchtungslicht kollimiert gelangt, machen die angezeigte Information über einen Blickwinkel gut sichtbar, der gegenüber demjenigen Blickwinkel eingeschränkt ist, der sich einstellt, wenn die Region des Displays mit gestreutem Licht der Hinterleuchtungseinheit hinterleuchtet wird. Als Beispiel für ein erfindungsgemäß eingesetztes optoelektronisches Panel sei auf die bekannten Konzepte auf Basis von Flüssigkristallzellen verwiesen. Die Hinterleuchtung von Regionen des Displays mit gebündeltem Licht entspricht dem Betrieb der Anzeigevorrichtung bzw. von Regionen des Displays im Privat-Modus, wohingegen der Betrieb im Teilungs-Modus bei Hinterleuchtung des Displays mit gestreutem Licht gegeben ist.

Nach der Erfindung lässt sich also die Anzeigefläche lokal, d.h. für bestimmte Zonen oder Regionen im Teilungs-Modus oder im Privat-Modus betreiben. Hierzu dient das optoelektronische Panel oder allgemeiner formuliert eine Schicht in z.B. Liquid Crystal (LC-)Technologie, die es ermöglicht, durch elektrische Ansteuerung von Bereichen des Panels das dieses durchdringende Licht zu kollimieren oder zu streuen. Die Schicht bzw. das optoelektronische Panel ist hierzu in einzelne "Pixel" unterteilt, die einzeln ansteuerbar sind, wobei ein Pixel oder mehrere Pixel unabhängig voneinander ansteuerbare Bereiche bilden.

Das elektrooptische Panel kann insbesondere so konzipiert sein, wie es beispielhaft in DE-A-10 2020 100 709 beschrieben ist. Demnach weist die elektrooptische Panel einen ersten Polarisator, einen zweiten Polarisator, eine erste Flüssigkristallschicht, eine erste Ausrichtungsschicht und eine zweite Ausrichtungsschicht auf. Der erste Polarisator und der zweite Polarisator sind hintereinander längs der optischen Achse des Lichtes angeordnet. Die erste Flüssigkristallschicht befindet sich zwischen dem ersten Polarisator und dem zweiten Polarisator. Zwischen dem ersten Polarisator und der ersten Flüssigkristallschicht befindet sich die erste Ausrichtungsschicht (alignment layer), während sich die zweite Ausrichtungsschicht zwischen dem zweiten Polarisator und der ersten Flüssigkristallschicht befindet. Die Ausrichtungsrichtung der ersten Ausrichtungsschicht ist zur Ausrichtungsrichtung der zweiten Ausrichtungsschicht senkrecht.

Alternativ können auch zwei der zuvor genannten "optical stacks" hintereinander angeordnet sein und gemeinsam das optische Panel der erfindungsgemäßen Anzeigevorrichtung bilden.

Für weitere Einzelheiten des zuvor beschriebenen beispielhaften Aufbaus des optischen Panels gemäß den beiden Varianten wird auf DE-A-10 2020 100 790 (siehe insbesondere die Fign. 1 und 6 mit zugehöriger Beschreibung) verwiesen.

In zweckmäßiger Weiterbildung der Erfindung kann vorgesehen sein, dass die Hinterleuchtungseinheit eine Vielzahl von Lichtquellen aufweist, von denen jeweils mindestens eine oder jeweils eine Gruppe von Lichtquellen jeweils einem anderen der unabhängig voneinander ansteuerbaren Bereiche des optoelektronischen Panels zugeordnet ist, und dass diejenige mindestens eine Lichtquelle oder die Lichtquellen jeweils einer Gruppe, die einem im Privat-Modus zu betreibenden Bereich des optoelektronischen Panels zugeordnet ist, mittels der Ansteuereinheit dimmbar ist. Bei dieser Weiterbildung der Erfindung wird die Sichtbarkeit von an der Anzeigevorrichtung angezeigter Information durch lokales Dimmen des Hinterleuchtungslichtes weiter reduziert. Dies erfolgt beispielsweise durch Verwendung einer Hinterleuchtungseinheit, die eine Vielzahl von Lichtquellen aufweist, wobei jede Lichtquelle ein oder mehrere Leuchtmittel und einen Reflektor aufweist. Bei den Lichtmitteln handelt es sich vorzugsweise um LEDs. In denjenigen Regionen des Displays, deren zugeordnete Lichtquellen gedimmt sind, wird die Information an der Anzeigevorrichtung dementsprechend weniger stark beleuchtet angezeigt. Insoweit wird also die Hinterleuchtung des gesamten Displays hinsichtlich des Helligkeitsgrades moduliert. Dies erfolgt bei Betrieb ausgewählter Bereiche des optoelektronischen Panels im Privat-Modus. Insoweit steuert die Ansteuerungseinheit das optoelektronische Panel und die Hinterleuchtungseinheit entsprechend aufeinander abgestimmt.

In weiterer vorteilhafter Ausgestaltung der Erfindung kann vorgesehen sein, dass die Hinterleuchtungseinheit einen Lichtleiter und/oder einen optischen Film und/oder eine Diffusionsfolie sowie Lichtquellen aufweist, die auf der dem optoelektronischen Panel abgewandten Rückseite des Lichtleiters und/oder des optischen Films und/oder der Diffusionsfolie angeordnet oder mit Abstand und diesem zugewandt angeordnet ist. Hierbei können die Lichtquellen Leuchtmittel in Form beispielsweise von LEDs und Reflektoren aufweisen. Die Verwendung eines Lichtleiters und/oder eines optischen Films und/oder einer Diffusionsfolie bei Anordnung der Lichtquellen auf deren jeweiliger Rückseite (sogenannte Direct Backlight Unit) kann es zur Vermeidung von hellen Lichtpunkten auf der Lichtaustrittsseite erforderlich sein, durch Aufbringung von Abschattungen oder Einarbeitung von Strukturen in die Lichtaustrittsseite für eine Homogenisierung des austretenten Lichts sorgen zu müssen. Beispiele für derartige Maßnahmen sind in DE 10 2020 131 013 A1 und US 8 388 159 B2 beschrieben.

Wie bereits oben beschrieben, besteht ein Merkmal der Erfindung darin, dass diejenigen Regionen des Displays, die im Privat-Modus betrieben werden sollen, anwählbar oder gar auswählbar sind. Dies umfasst eine Variante, bei der die einzelnen Regionen im Vorhinein festgelegt sind, aber auch Varianten, bei denen die Regionen vom Bediener beliebig auswählbar sind, was beispielsweise durch Eingabe von die einzelnen Regionen definierenden Parametern oder aber bei einer Anzeigevorrichtung mit Berührungssensorik durch Antippen bzw. durch Markierung von Regionen durch Verfahren eines Objekts auf der Anzeigefläche möglich ist.

Die erfindungsgemäße Anzeigevorrichtung kann im Bedarfsfalle zusätzlich mit Merkmalen versehen sein, die mit einer Hinterleuchtungseinheit versehen sind, die für eine asymmetrische Lichtverteilung sorgt. Die asymmetrische Lichtverteilung ist gegebenenfalls nicht in dem Sinne beeinflussbar, dass sie "symmetrierbar" ist. Damit ist die Leuchtdichte in demjenigen Bereich, der im Privat-Modus weniger lichtintensiv ist, grundsätzlich gering. Im Teilungs-Modus kann dann durch Verstärkung der Lichtintensität der Lichtquellen für eine insbesondere den Anforderungen bei Automobil-Anwendungen genügende Hinterleuchtung des Displays gesorgt werden.

Die Erfindung wird nachfolgend anhand eines Ausführungsbeispiels sowie unter Bezugnahme auf die Zeichnung näher erläutert. Im Einzelnen zeigen dabei:
- Fig. 1: einen Blick von hinten und von oben auf den vorderen Innenraum eines Fahrzeugs,
- Fig. 2: eine schematische Darstellung der Umschaltmöglichkeit einzelner Bereiche des Displays zwischen "gebündelter Lichtweitergabe" und "gestreute Lichtweitergabe",
- Fig. 3: Lichtverteilkurven im Teilungs-Modus (gestrichelte Kurve) und im Privat-Modus (durchgezogen gezeichnete Kurve),
- Fig. 4: eine schematische Darstellung der Situation, in der die Sichtbarkeit von einzelnen Bereichen (Segmenten) der Anzeigefläche für den Fahrer eingeschränkter ist als für den Beifahrer, und
- Fig. 5: verschiedene Szenarien für die Auswahl von Bereichen der Anzeigefläche für den Betrieb im Teilungs-Modus bzw. für den gleichzeitigen Betrieb von Bereichen im Privat-Modus und von anderen Bereichen im Teilungs-Modus.

Sichtschutzfunktionen bei Displays existieren bereits seit einigen Jahren, insbesondere auf dem Verbrauchermarkt. In den einfachsten Implementierungen wird ein statischer Sichtschutzeffekt durch die Verringerung des Blickwinkels des Displays erreicht, z. B. durch die Verwendung von Light Control Films.

Ein weiterer Ansatz ist, Sichtschutz dynamisch zu aktivieren und zu deaktivieren, z. B. durch die Verwendung eines dualen Hinterleuchtungssystems. Hierbei ist im Teilungs-Modus ein "normales" Seherlebnis durch Beleuchtung über einen weiten Blickwinkel möglich, während im Privat-Modus eine stärker kollimierte bzw. gebündelte Lichtemission verwendet wird. Auf diese Weise können nur Betrachter, die sich in Ausbreitungsrichtung des kollimierten Lichts befinden, den Inhalt bequem sehen.

Diese Ansätze weisen jedoch häufig auch außerhalb des vorgesehenen Blickwinkels noch eine gewisse Leuchtdichte auf. Aufgrund der Anpassbarkeit des menschlichen Auges an schwache Lichtverhältnisse führt dies zu einer verbleibenden Sichtbarkeit des Bildes und damit zu einem mangelhaften Sichtschutz, insbesondere bei dunklen Umgebungslichtverhältnissen.

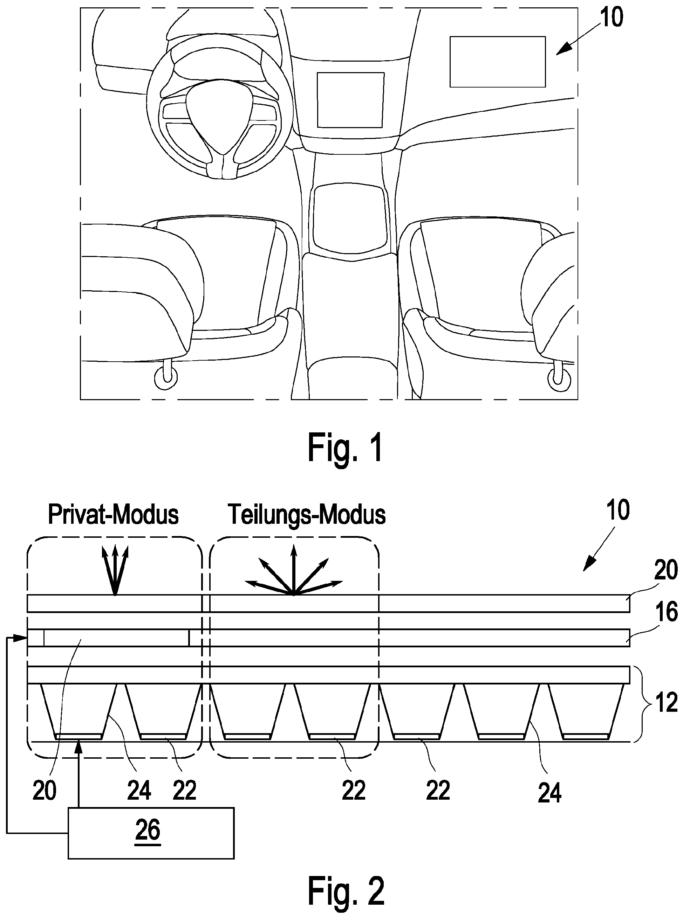

Eine bevorzugte Anwendung der Erfindung liegt auf dem Automobil-Bereich. Fig. 1 zeigt einen Blick von hinten auf den vorderen Teil eines Fahrzeuginnenraums. Auf der Beifahrerseite befindet sich ein LCD-Display 10. Auf diesem Display können nun einzelne Bereiche selektiv im Teilungs-Modus oder im Privat-Modus betrieben werden. Moderne Fahrzeuge verfügen mitunter über "Door-To-Door"-Displays. Hier wäre also der dem Beifahrer gegenüberliegend angeordnete Displaybereich derjenige, in dem verschiedene Bereiche im Privat-Modus und im Teilungs-Modus betrieben werden können.

Nach der Erfindung wird ein direktes Hinterleuchtungssystem mit einem segmentierten, optoelektronischen Sichtschutzzellen-Panel kombiniert, so dass der Sichtschutzeffekt in diskreten Bereichen des Displays 10 unabhängig voneinander aktiviert werden kann. Das in Fig. 2 schematisch dargestellte Display 10 weist eine Direct-Lit-Hinterleuchtungseinheit 12, eine optische Folie 14 zur Erhöhung der Effizienz, zur "Formung" des emittierten Lichts auf polymerdispergierten Flüssigkristallen (PDLC) basierte Sichtschutzzellen als Beispiel für ein optoelektronisches Panel 16 auf, wobei die Sichtschutzzellen (in Fig. 2 bei 18 angedeutet) vollständig oder nur in ausgewählten Bereichen angesteuert werden können, sowie ein Flüssigkristallanzeigemodul 20 (LCD) auf, auf dessen Anzeigefläche noch ein Touch-Panel oder ein Deckglas (beides nicht dargestellt) angeordnet sein können.

In Display-Bereichen, die im Privat-Modus verwendet werden, ist das emittierte Licht (siehe die Pfeile links in Fig. 1) im Vergleich zu Bereichen im Teilungs-Modus (siehe die Pfeile rechts daneben) viel gerichteter.

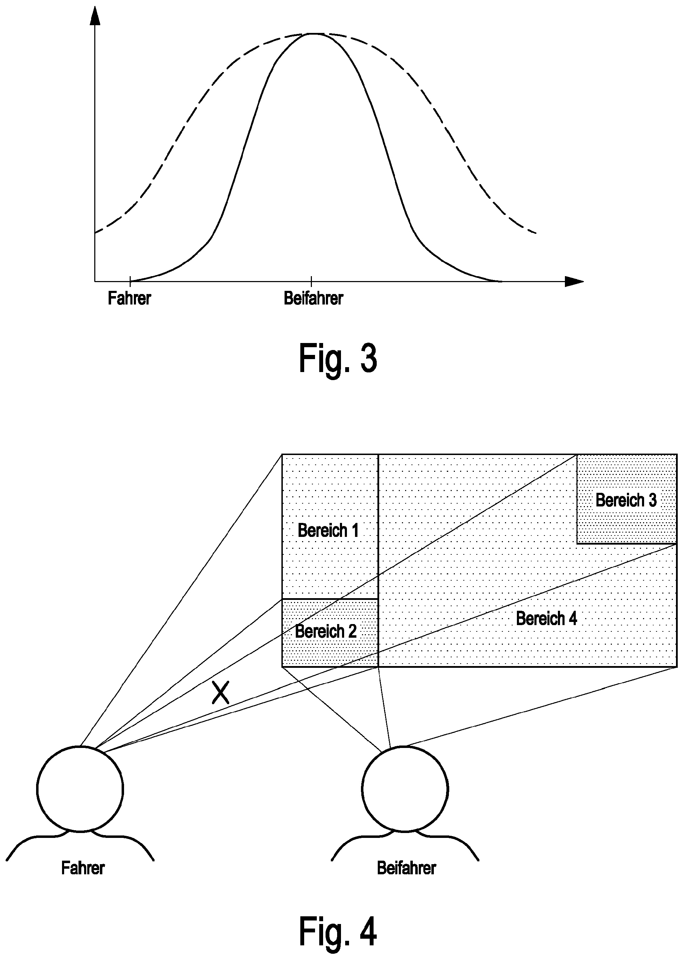

Bei Blickwinkeln, bei denen der Sichtschutzeffekt zum Tragen kommt, z.B. bei der Fahrerposition in einem Fahrzeug, bleiben die Teile des Displays, die sich noch im Teilungs-Modus befinden, gut sichtbar und verhindern somit die vollständige Anpassung des Auges an den dunklen Zustand. Dadurch wird die Sichtbarkeit der Segmente im Privat-Modus aus dem Blickwinkel des Fahrers verringert, was die subjektive Sichtschutzleistung erhöht und die Ablenkung während des Fahrzeugbetriebs verringert (Fig. 3).

Durch den Einsatz einer direkten Hinterleuchtung (siehe in Fig. 2 die Lichtquellen 22 mit gegebenenfalls den Reflektoren 24), die lokal gedimmt werden kann, kann ein zweiter Faktor zur Verbesserung der Sichtschutzfunktion des Displays genutzt werden: Die Display-Bereiche mit aktiviertem Privat-Modus können selektiv gedimmt werden, so dass sie aus Sicht des Fahrers noch weniger sichtbar sind.

Eine elektronische Ansteuereinheit 26, die das optoelektronische Panel 16 bzw. dessen einzelne Sichtschutzzellen ansteuert für den Betrieb entweder im Privat-Modus oder im Teilungs-Modus (selektiv für jede Sichtschutzzelle), sorgt in diesem Fall auch für die Dimmung der einzelnen Lichtquellen 22, wie in Fig. 2 gezeigt.

Fig. 3 zeigt die Sichtbarkeit von Display-Bereichen aus verschiedenen Positionen im Fahrzeug: Bereiche im Teilungs-Modus (in geringer Punktdichte dargestellt) zeigen eine hohe Lichtdichte über den gesamten Blickwinkel, was zu einer guten Sichtbarkeit sowohl für den Fahrer als auch für den Beifahrer führt. Display-Bereiche im Privat-Modus (in höherer Punktdichte gezeigt) weisen ebenfalls eine gute Lichtdichte für den Beifahrer auf, jedoch eine sehr geringe Lichtdichte in der Fahrerposition und sind daher von der Fahrerposition aus nicht oder schlechter lesbar. Dadurch, dass bestimmte Bereiche des Displays bzw. seiner Anzeigefläche für den Fahrer weiterhin gut sichtbar sind, können sich seine Augen an die schlechter sichtbaren Bereiche, die im Privat-Modus betrieben werden, nicht vollständig anpassen. Das erhöht zusätzlich die Sichtschutzleistung.

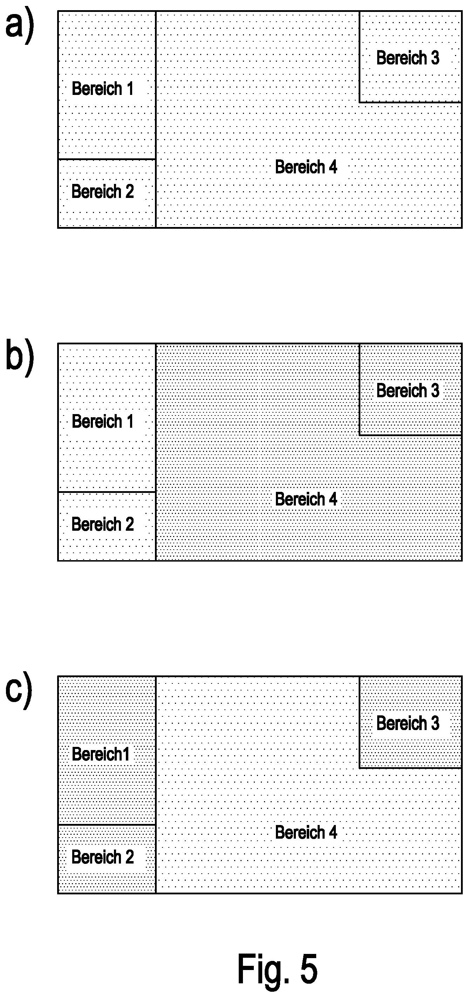

Darüber hinaus entstehen neue Anwendungsfälle, wenn sich nur einige Teile des Displays im Privat-Modus befinden (Fig. 4). Bei der Verwendung des Displays zur Menüführung können alle Teile sichtbar sein (Fig. 5a)). Steuerelemente wie die Temperatursteuerung können für alle Fahrzeuginsassen sichtbar bleiben (Fig. 5b), Bereiche 1 und 2), während dynamische Inhalte wie Filme oder Web-Aktivitäten in den Bereichen 3 und 4 des Displays mit Sichtschutzfunktion für den Fahrer angezeigt werden können. Auch während der Menüführung (Fig. 5c), Bereiche 1 und 4) können Benachrichtigungen in den Teilen des Displays (Bereiche 2 und 3) im Privat-Modus angezeigt werden, um den Fahrer nicht abzulenken und die Vertraulichkeit der Nachrichten sicherzustellen.

Die Anzahl der Segmente kann weiter erhöht werden, indem die Segmente mit einer passiven oder aktiven Matrix angesteuert werden, die der Anzahl der durch die direkte Hinterleuchtung bereitgestellten lokalen Dimmzonen entspricht.

Grundsätzlich ist es nach der Erfindung so, dass die Umschaltung zwischen den beiden Modi pixelweise erfolgt. Ein einzelnes Pixel kann also jeweils umgeschaltet werden. Die Bereiche auf dem Display, die umschaltbar sind, sind damit beliebig steuerbar und wählbar. Im Grunde genommen existieren somit so viele umschaltbare Segmente, wie das Display Pixel aufweist.

Das erfindungsgemäße Konzept ist auch in Kombination mit anderen umschaltbaren oder stationären Privacy-Konzepten kombinierbar. Beispiele dafür finden sich in der deutschen Patentanmeldung 10 2021 126 024.8 vom 7. Oktober 2021 oder in der deutschen Patentanmeldung mit dem Titel "Anzeigevorrichtung, insbesondere für ein Fahrzeug, mit umschaltbarem Teilungs- und Privat-Modus" (Anwaltszeichen: 212844DE; eingereicht am gleichen Tage wie die vorliegende Patentanmeldung) oder in der deutschen Patentanmeldung 10 2021 126 025.6 vom 7. Oktober 2021 oder in der deutschen Patentanmeldung mit dem Titel "Anzeigevorrichtung, insbesondere für ein Fahrzeug, zum Anzeigen von Information mit asymmetrischer Hinterleuchtung" (Anwaltszeichen: 212845DE; eingereicht am gleichen Tage wie die vorliegende Patentanmeldung).

Der Gegenstand der vorstehend genannten Patentanmeldungen wird hiermit durch Bezugnahme zum Inhalt der vorliegenden Patentanmeldung.

Bei Displays mit schaltbarer Sichtschutzfunktion zum Wechseln zwischen Teilungs-Modus und Privat-Modus, wir nach der Erfindung vorgesehen, kann dies sowohl manuell als auch automatisch erfolgen. Bei Automobil-Anwendungen bietet sich eine automatische Umschaltung vom Teilungs-Modus in den Privat-Modus dann an, wenn beispielsweise durch eine den Fahrer beobachtende Kamera erkannt wird, dass der Fahrer in Richtung Beifahrerdisplay oder Beifahrerdisplaybereich blickt (Eyetracking). Es böte sich in derartigen Fällen aber auch an, auf den Privat-Modus automatisch dann umzuschalten, wenn auf dem Beifahrerdisplay bzw. Beifahrerdisplaybereich "bewegte Bilder" gezeigt werden. Es existieren also verschiedene Ansätze für die automatische Umschaltung von Teilungs-Modus in Privat-Modus. Entsprechend erfolgt dann auch die Zurücksetzung in den Teilungs-Modus automatisch. Die automatische Umschaltung in den Privat-Modus kann bei Fahrzeugen mit Sitzbelegungserkennung dann entfallen, wenn keine Beifahrersitzbelegung detektiert wird.

### BEZUGSZEICHENLISTE

- 10: Display
- 12: Hinterleuchtungseinheit
- 14: optische Folie
- 16: optoelektronisches Panel
- 18: Sichtschutzzellen des optoelektronischen Panels
- 20: LCD-Display
- 22: Lichtquellen
- 24: Reflektoren
- 26: Ansteuereinheit

## Patentansprüche

1. Anzeigevorrichtung insbesondere für ein Fahrzeug zum Anzeigen von Information, mit
- einem elektronischen, Pixel aufweisenden Display (10) mit einer Vorderseite, die eine Anzeigefläche aufweist, und mit einer der Vorderseite abgewandte Rückseite,
- einer Hinterleuchtungseinheit (12) zur Hinterleuchtung des Displays (10), die eine der Rückseite des Displays (10) zugewandt angeordnete Lichtaustrittsseite aufweist,
- einem optoelektronischen Panel (16), das zwischen dem Display (10) und der Hinterleuchtungseinheit (12) angeordnet ist, wobei das optoelektronische Panel (16) mindestens zwei oder mehr als zwei unabhängig voneinander entweder in einem Privat-Modus oder in einem Teilungs-Modus betreibbare Bereiche aufweist, in denen von der Hinterleuchtungseinheit (12) auftreffendes Licht für die Sichtbarkeit der auf der Anzeigefläche angezeigten Information bei einem Betrieb in dem Privat-Modus gebündelt an mit diesen Bereichen jeweils fluchtende Regionen des Displays (10) weiterleitbar und für die Sichtbarkeit der auf der Anzeigefläche angezeigten Information bei einem Betrieb in dem Teilungs-Modus gestreut an mit diesen Bereichen jeweils fluchtende Regionen des Displays (10) weiterleitbar ist, und
- einer elektronischen Ansteuereinheit (26) zur Ansteuerung sowohl des optoelektronischen Panels (16) für den Betrieb von Bereichen im Privat-Modus oder im Teilungs-Modus als auch des Displays (10) und der Hinterleuchtungseinheit (12), **dadurch gekennzeichnet, dass** eine Umschaltung zwischen den beiden Modi für jedes Display-Pixel unabhängig voneinander erfolgt.

2. Anzeigevorrichtung nach Anspruch 1, **dadurch gekennzeichnet, dass** die Hinterleuchtungseinheit (12) einen Lichtleiter und/oder einen optischen Film und/oder eine Diffusionsfolie sowie insbesondere in einer Matrixform verteilt angeordnete Lichtquellen (22) aufweist, die auf der dem optoelektronischen Panel (16) abgewandten Rückseite des Lichtleiters oder auf der dem optischen Panel (16) abgewandten Rückseite des optischen Films oder auf der dem optischen Panel (16) abgewandten Rückseite der Diffusionsfolie angeordnet oder mit Abstand zu einer der zuvor genannten Rückseiten und dieser betreffenden Rückseite zugewandt angeordnet ist.

3. Anzeigevorrichtung nach Anspruch 2, **dadurch gekennzeichnet, dass** die Lichtquellen (22) Leuchtmittel, insbesondere LEDs, und Reflektoren aufweisen.

4. Anzeigevorrichtung nach einem der Ansprüche 1 bis 3, **dadurch gekennzeichnet, dass** die Hinterleuchtungseinheit (12) eine Vielzahl von Lichtquellen (22) aufweist, von denen jeweils mindestens eine einem jeweiligen anderen der unabhängig voneinander betreibbaren Bereiche des optoelektronischen Panels (16) zugeordnet ist, und dass diejenige mindestens eine Lichtquelle (22), die einem im Privat-Modus zu betreibenden Bereich des optoelektronischen Panels (16) zugeordnet ist, mittels der Ansteuereinheit (26) dimmbar ist.

5. Anzeigevorrichtung nach einem der Ansprüche 1 bis 4, **dadurch gekennzeichnet, dass** die Regionen auf der Anzeigefläche für die Sichtbarkeit der dort angezeigten Information im Privat-Modus oder im Teilungs-Modus manuell auswählbar sind.

6. Anzeigevorrichtung nach Anspruch 5, **dadurch gekennzeichnet, dass** der Anzeigefläche eine Berührungssensorik zugeordnet ist und dass die Regionen auf der Anzeigefläche mittels durch Berühren erfolgendes Markieren auswählbar sind.

## Claims

1. A display device, in particular for a vehicle, for displaying information, comprising
- an electronic display (10) having pixels, comprising a front side having a display surface, and a rear side facing away from the front side,
- a backlighting unit (12) for backlighting the display (10), which has a light output side arranged so as to face the rear side of the display (10),
- an optoelectronic panel (16) which is arranged between the display (10) and the backlighting unit (12), wherein the optoelectronic panel (16) comprises at least two or more than two areas adapted to be operated independently either in a private mode or in a sharing mode, in which modes light impinging from the backlighting unit (12) is transmittable in a bundled manner to regions of the display (10), each flush with these areas, for the visibility of information displayed on the display surface, when operated in the private mode, and is transmittable in a scattered manner to regions of the display (10), each flush with these areas, for the visibility of information displayed on the display surface, when operated in the sharing mode, and
- an electronic control unit (26) for controlling both the optoelectronic panel (16) for operating areas in the private mode or in the sharing mode, as well as the display (10) and the backlighting unit (12), **characterized in that** switching between the two modes takes place independently of one another for each display pixel.

2. The display device according to claim 1, **characterized in that** the backlighting unit (12) has a light guide and/or an optical film and/or a diffusion foil as well as light sources (22) which are arranged in particular distributed in a matrix shape, which is arranged on the rear side of the optical fiber facing away from the optoelectronic panel (16), or is arranged on the rear side of the optical film facing away from the optical panel (16), or is arranged on the rear side of the diffusion foil facing away from the optical panel (16), or is arranged at a distance from one of the aforementioned rear sides and facing this respective rear side.

3. The display device of claim 2, **characterized in that** the light sources (22) comprise illuminants, in particular LEDs, and reflectors.

4. The display device according to one of claims 1 to 3, **characterized in that** the backlighting unit (12) comprises a plurality of light sources (22), at least one of which is assigned to a respective other of the independently operable areas of the optoelectronic panel (16), and **in that** the at least one light source (22) which is assigned to an area of the optoelectronic panel (16) to be operated in the private mode is dimmable by means of the control unit (26).

5. The display device according to one of claims 1 to 4, **characterized in that** the regions on the display surface can be selected manually for the visibility of the information displayed there in the private mode or in the sharing mode.

6. The display device according to claim 5, **characterized in that** a touch sensor system is assigned to the display surface and that the regions on the display surface can be selected by being marked through a touch operation.

## Revendications

1. Dispositif d'affichage, notamment pour véhicule, pour l'affichage d'informations, avec
- un écran électronique présentant des pixels (10) avec un côté avant, qui présente une surface d'affichage, et avec un côté arrière opposé au côté avant,
- une unité de rétroéclairage (12) pour le rétroéclairage de l'écran (10), qui présente un côté émetteur de lumière disposé en étant orienté vers le côté arrière de l'écran (10),
- un panneau optoélectronique (16), qui est disposé entre l'écran (10) et l'unité de rétroéclairage (12), dans lequel le panneau optoélectronique (16) présente au moins deux ou plus de deux domaines pouvant fonctionner indépendamment les uns des autres dans un mode privé ou dans un mode partagé, dans lesquels la lumière incidente provenant de l'unité de rétroéclairage (12) peut être dirigée regroupée dans des régions de l'écran (10) voisines de ces domaines dans le cas d'un fonctionnement dans le mode privé pour la visibilité des informations affichées sur la surface d'affichage et peut être dirigée de manière dispersée dans des régions de l'écran (10) voisines de ces domaines dans le cas d'un fonctionnement dans le mode partagé pour la visibilité des informations affichées sur la surface d'affichage, et
- une unité de commande électronique (26) pour la commande du panneau optoélectronique (16) pour le fonctionnement de domaines dans le mode privé ou dans le mode partagé ainsi que de l'écran (10) et de l'unité de rétroéclairage (12), **caractérisé en ce qu'**une commutation entre les deux modes a lieu indépendamment pour chaque pixel de l'écran.

2. Dispositif d'affichage selon la revendication 1, **caractérisé en ce que** l'unité de rétroéclairage (12) présente un guide de lumière et/ou un film optique et/ou une feuille de diffusion ainsi que des sources lumineuses (22) disposées de manière répartie en particulier en forme de matrice, qui sont disposées sur le côté arrière du guide de lumière opposé au panneau optoélectronique (16) ou sur le côté arrière du film optique opposé au panneau optique (16) ou sur le côté arrière de la feuille de diffusion opposé au panneau optique (16) ou disposées à distance de l'un des côtés arrière mentionnés précédemment et orientées vers ce côté arrière.

3. Dispositif d'affichage selon la revendication 2, **caractérisé en ce que** les sources lumineuses (22) présentent des lampes, en particulier des LED, et des réflecteurs.

4. Dispositif d'affichage selon l'une des revendications 1 à 3, **caractérisé en ce que** l'unité de rétroéclairage (12) présente une multiplicité de sources lumineuses (22), dont au moins l'une est affectée à un autre des domaines du panneau optoélectronique (16) qui peuvent fonctionner indépendamment les uns des autres, et **en ce que** la au moins une source lumineuse (22) qui est affectée à un domaine du panneau optoélectronique (16) qui doit fonctionner dans le mode privé peut être affaiblie au moyen de l'unité de commande (26).

5. Dispositif d'affichage selon l'une des revendications 1 à 4, **caractérisé en ce que** les régions sur la surface d'affichage peuvent être choisies manuellement dans le mode privé ou dans le mode partagé pour la visibilité des informations qui y sont affichées.

6. Dispositif d'affichage selon la revendication 5, **caractérisé en ce qu'**un capteur tactile est affecté à la surface d'affichage et **en ce que** les régions sur la surface d'affichage peuvent être choisies au moyen d'une identification ayant lieu de manière tactile.
